# EUROPEAN PATENT SPECIFICATION

(11) **EP 2 236 252 B1**
(45) Date of publication and mention of the grant of the patent: **31.10.2012**
(21) Application number: 09156680.2
(22) Date of filing: 30.03.2009
(51) Int. Cl.: B25J 15/06, B25B 11/00, B65G 47/91, B65H 3/08, B66C 1/02

(54) **Device for gripping an object by suction**
Vorrichtung zum Greifen eines Objekts per Ansaugung
Dispositif pour saisir un objet par succion

(43) Date of publication of application: 06.10.2010
(73) Proprietor: van Sorgen, Carel Johannes Wilhelm Theodoor, 7101 BN Winterswijk (NL)
(72) Inventor: van Sorgen, Carel Johannes Wilhelm Theodoor, 7101 BN Winterswijk (NL)
(74) Representative: 't Jong, Bastiaan Jacob

(56) References cited:
- EP-A- 0 396 210
- EP-A- 1 967 481
- WO-A-01/62447
- WO-A-2006/125520
- DE-A1- 3 047 717
- DE-A1- 3 741 091
- DE-A1- 10 245 716
- FR-A- 2 784 926
- JP-A- 2003 200 373
- US-A- 5 749 614

## Description

The invention relates to a device for gripping an object by suction.

Such a device is for example used for picking up sheet like parts, like steel plates or cardboard. The suction device generally comprises some kind of suction mouth, which is connected to a low pressure source. Low pressure is understood to be a pressure well below the ambient pressure.

When an object is brought in contact with the suction mouth, this suction mouth is closed off and the object is sucked against the suction mouth as a result of the pressure difference between the low pressure source and the ambient pressure.

However, when the suction mouth is closed off only partially a large low pressure flow is necessary to still grip an object. To resolve this problem, it is known in the prior art to provide a number of discrete suction mouths, each of which is provided with a restriction valve. If the flow through this valve passes a certain limit, the valve is closed off. So, when a suction mouth is not closed off, the flow will be large through this suction mouth, such that the valve will be closed. Although this solution reduces the consumption of low pressure, it is still necessary to have initially a large flow to be able to activate the valves of the suction mouths, which are not closed off. This requires large pumps.

Furthermore, the arrangement of a valve per suction mouth increases the costs.

DE-A-10245716 describes a device for gripping an object by suction. This device comprises a body which is provided with a plurality of valves connected to a low pressure source. A suction plate is arranged to the body, which suction plate is lined with a flexible layer. This suction plate and flexible layer is provided with holes corresponding to the valves in the body.

In this prior art document it is described that when gripping an object by suction, the walls of the holes can collapse due to the pressure. In this prior art, this collapsing is prevented by inserting support elements in the holes. These support elements can be a open-cell foam or spring elements.

It is clear, that the prior art is of the opinion, that the holes in the suction plate should be kept open as well as possible.

A device according to the preamble of Claim 1 is disclosed in document US 5 749 614.

The disadvantage of all the known prior art, is that large low pressure pumps are necessary to be able to pick up parts, which only partially close off the suction mouths. The usage of low pressure is reduced by introducing valves in the openings, but these valves do increase the costs of the device.

It is now an object of the invention to provide a device according to the preamble, which reduces or eliminates the above mentioned disadvantages.

This object is achieved with a device comprising:
- a permeable support plate;
- a layer of flexible material arranged on the support plate;
- a low pressure chamber arranged on the support plate at the opposite side of the layer of flexible material,
wherein the layer of flexible material is of a non permeable material, which layer is provided with a plurality of cracks running from one surface towards the opposite surface.

It has turned out, that with a device according to the preamble, the volume of low pressure can be reduced considerably, such that smaller pumps can be used and that there is no need to provide special valves.

This is achieved by providing cracks in the flexible, non permeable material. These cracks are normally closed, but only by providing a sufficient pressure difference a small flow of air will occur through these cracks. When a surface of an object is pressed against the crack, the air between the surface of the object and the flexible material is sucked away through this crack and the pressure difference will provide the force with which the object is pressed against the device. The air flow through the other, not closed off cracks is still very minimal, such that the overall consumption of air is kept small, while still a firm grip is achieved on the objects.

In an embodiment of the device according to the invention, the permeable support plate is provided with a plurality of holes. Preferably each crack is arranged in line with one of the plurality of holes. This makes sure, that at least through each crack air can be sucked away and that the crack is not blocked by the support plate.

In a preferred embodiment of the invention the cracks are straight and run perpendicular between the two surfaces. This embodiment is preferred out of manufacturing view point. The cracks can simply be provided in the layer of flexible material by piercing the material with needles.

In yet another preferred embodiment of the device according to the invention the cracks are straight and the angle between the cracks and the two surfaces is smaller than 90°. Although slightly more difficult to manufacture, this embodiment has the advantage, that when the flexible material is compressed due to the pressure difference between the low pressure chamber and the ambient pressure, the cracks are pressed closed as a result. The compression of the material will generally be perpendicular to the support plate. As the cracks run under an angle to this support plate, they will be pressed closed as a result.

In yet another embodiment the flexible material is a closed-cell foam.

The characteristics of the used flexible layer will influence the effectiveness of the device. When using for example a closed-cell foam, the firmness of the foam will influence the amount of air sucked through the cracks. A very firm foam will press the cracks closed better, than a soft foam. Also the size of the cracks will influence the 'valve'-like action of the flexible layer.

It should however be clear that the gist of the invention lies in the use of a flexible layer, which is impermeable in rest position, i.e. when no pressure difference is present. Only after providing a pressure difference over the flexible layer, the cracks open up making the flexible layer permeable. These cracks stay open as long as a pressure difference is present. The amount of air pass through of the cracks, i.e. the 'valve'-like action, is determined by the characteristics of the foam.

In still another embodiment of the device according to the invention the low pressure chamber is enclosed by walls, one of the walls comprising the permeable support plate. These walls provide an enclosure, or dome at the support plate, such that the low pressure is distributed evenly over the permeable support plate.

It is preferred that support ribs are arranged in the low pressure chamber. These support ribs provide strength to the walls, such that the wall can be relatively thin and will not collapse due to the low pressure in the chamber.

The low pressure in the chamber can be generated by connecting a compressor or pump to the low pressure chamber.

Another preferred feature of the invention is a second layer of flexible material arranged on the first layer of flexible, non permeable material, wherein the second layer comprises a plurality of holes. This second layer provides a means to account for unevennesses of the surface of the object, which is gripped by the invention. The firmness of the second layer could for example be lower than the firmness of the second layer, such that the second layer adapts itself to the surface of the object, while the first layer is firm enough to provide the required 'valve'-action.

Preferably, the plurality of holes in the second layer are aligned with the plurality of cracks in the first layer.The invention further comprises a method for manufacturing a device according to the invention, wherein the method comprising the steps of:
- providing a permeable support plate;
- providing a low pressure chamber on one side of the permeable support plate;
- arranging a layer of non permeable, flexible material on the second opposite side of the permeable support plate;
- stabbing the flexible material with at least a pin to create cracks in the flexible material.

A simple and reliable embodiment of the at least one pin is a needle.

Preferably the permeable support plate is provided with a plurality of holes and wherein a plate with a plurality of pins, aligned with the plurality of holes in the support plate is used for stabbing the flexible material. This enables the pins to stab through the flexible material and into the holes of the support plate, such that it is ensured, that the provided cracks run through from one surface to the opposite surface.

These and other features of the invention will be elucidated in conjunction with the accompanying drawings.
Figure 1 shows a cross sectional view of a first embodiment of the device according to the invention.
Figure 2 shows the embodiment of figure 1 in perspective view above a sheet metal plate.
Figure 3 shows the device according to figure 1 while holding a plate part by suction.
Figure 4 shows the method for manufacturing the device according to figure 1.
Figure 5 shows a second embodiment of the invention in cross sectional view.
Figure 6 shows a third embodiment of the invention in cross sectional view.

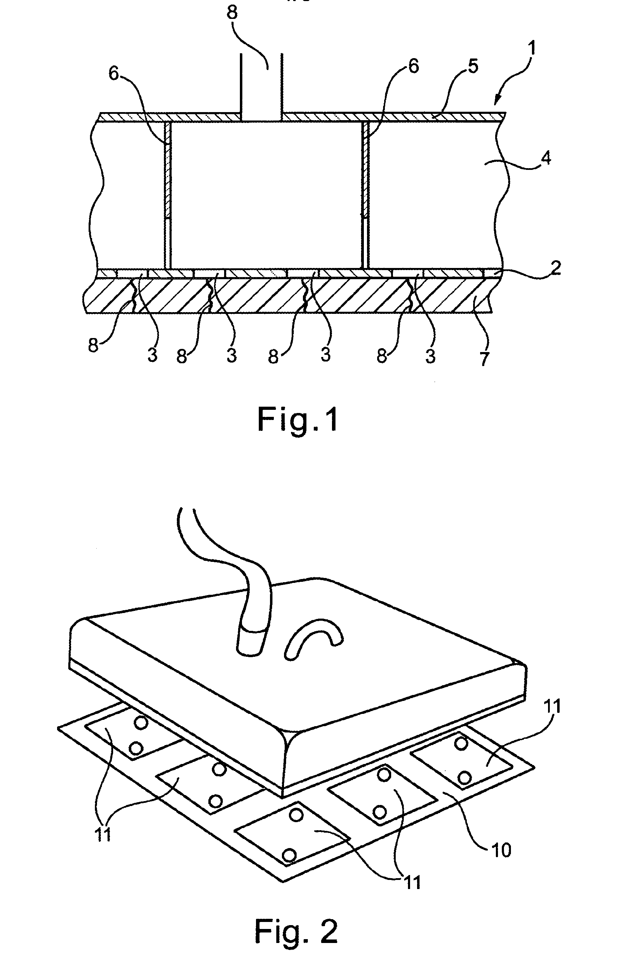

In figure 1 a first embodiment 1 of the invention is shown. This embodiment 1 has a permeable support plate 2, in which a number of holes 3 is arranged. On the upper surface of the support plate 2, a low pressure chamber 4 is arranged. This low pressure chamber is enveloped by the support plate 2 and walls 5. Between the upper wall 5 and the support plate 2 some support ribs 6 are arranged to prevent the low pressure chamber 4 from collapsing. At the top of the chamber 4 a connection 9 is arranged for connecting the chamber 4 with a low pressure pump or compressor.

At the bottom surface of the support plate 2 a layer 7 of flexible material is arranged. This flexible material is itself not permeable. However, cracks 8 are arranged in the flexible material 7, which cracks run from one surface to the opposite surface.

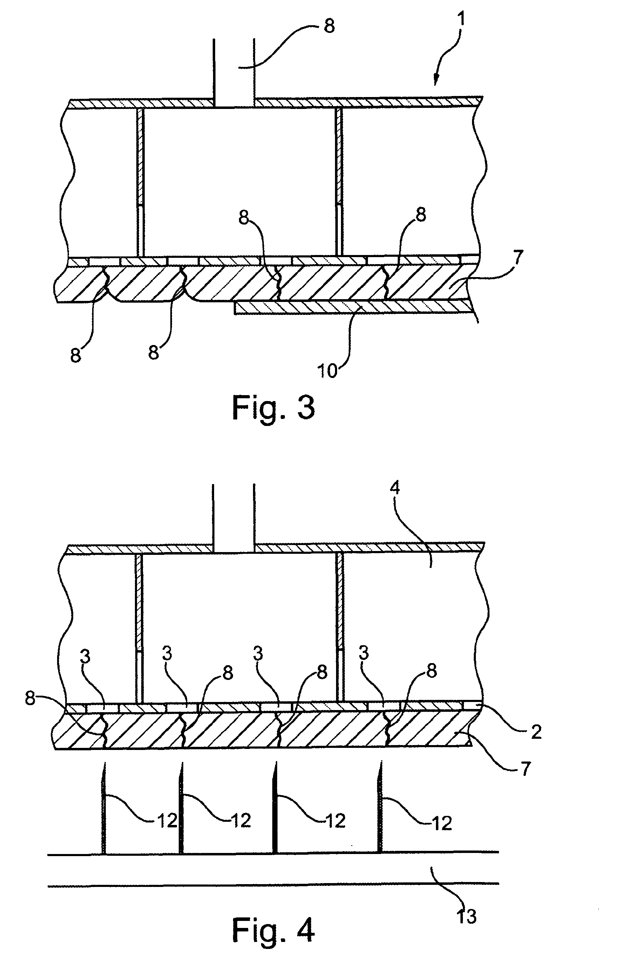

In figure 2, the device 1 is shown hanging over a sheet metal plate 10 out of which parts 11 are cut out. The device 1 is lowered onto the sheet metal plate 10, such that the flexible material 7 is in contact with the plate 10. After arranging the low pressure in the chamber 4, the plate parts 11 and the sheet metal plate 10 are sucked against the flexible material 7, as shown in figure 3.

The cracks 8 not being covered by the sheet metal plate 10, will be pressed inwardly as a result of the pressure difference between the low pressure chamber 4 and the ambient pressure.

In figure 4 is shown a method to provide the cracks 8 in the layer of flexible material 7. After providing a low pressure chamber 4, comprising a support plate 2 on which a layer of non permeable flexible material is arranged, the flexible material is pierced by a number of needles 12. These needles 12 are arranged on a support base 13 and the position of the needles 12 correspond to the position of the holes 3 in the support plate 2.

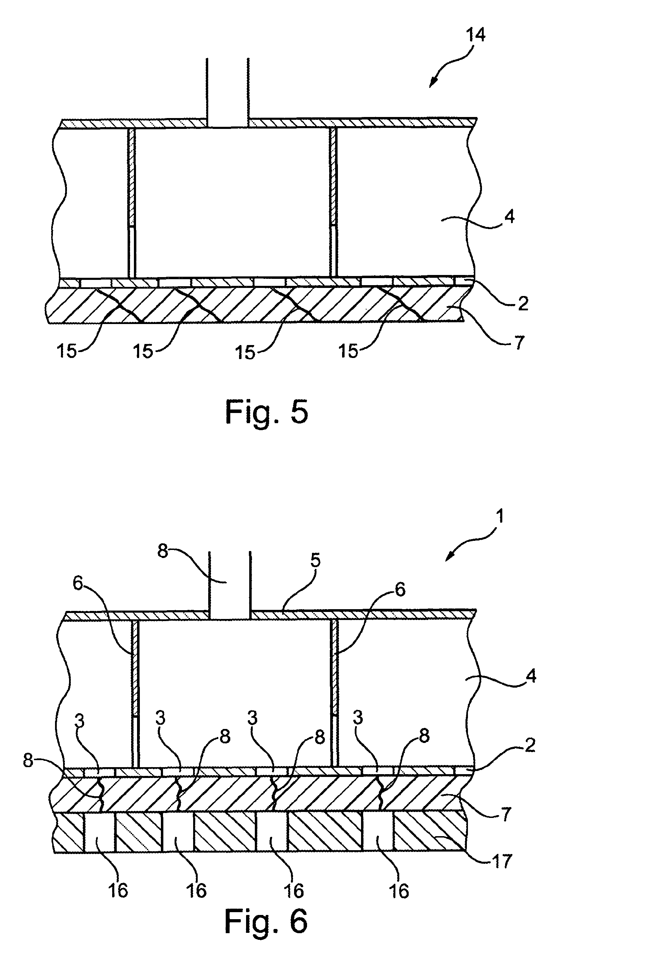

In figure 5 a second embodiment 14 of the invention is shown. This embodiment corresponds largely to the embodiment 1 of figure 1.

The embodiment 14 also comprises a low pressure chamber 4, a permeable support plate 2 and a layer of non permeable, flexible material 7.

In this embodiment 14, the cracks 15 are arranged under an angle smaller than 90° with the surface of the support plate 2. When the cracks 15 are not covered by an object and are sucked inward, similar to what is shown in figure 3, the cracks 15 are pressed closed, such that the leakage is further reduced.

In figure 6 a third embodiment of the invention is shown. This embodiment corresponds largely with the embodiment according to figure 1. The same features are provided with the same reference numerals.

On the layer of flexible material 7, which is preferably a closed-cell foam, a second layer of flexible material 17 is arranged. In this layer of flexible material 17 a plurality of holes 16 are arranged, which holes 16 are aligned with the cracks 8. This second layer of flexible material 17 is used to account for unevennesses in the contact surface with the object.

Although the invention is described in the examples as a device for picking up sheet-like material, the device can be used to pick up any object having at least a substantially flat surface. In particular boxes, such as sheet metal boxes or cardboard boxes can be picked up.

## Claims

1. Device for gripping an object by suction, which
device comprises:
- a permeable support plate (2);
- a layer (7) of flexible material arranged on the support plate;
- a low pressure chamber (4) arranged on the support plate at the opposite side of the layer of flexible material,
wherein the layer of flexible material is of a non permeable material, **characterised in that** the layer is provided with a plurality of cracks (8) running from one surface towards the opposite surface.

2. Device according to claim 1, wherein the permeable support plate is provided with a plurality of holes.

3. Device according to claim 2, wherein each crack is arranged in line with one of the plurality of holes.

4. Device according to any of the preceding claims,
wherein the cracks are straight and run perpendicular between the two surfaces.

5. Device according to any of the claims 1 - 3, wherein the cracks are straight and wherein the angle between the cracks and the two surfaces is smaller than 90°.

6. Device according to any of the preceding claims,
wherein the flexible material is a closed-cell foam.

7. Device according to any of the preceding claims,
wherein the low pressure chamber is enclosed by walls, one of the walls comprising the permeable support plate.

8. Device according to claim 7, wherein support ribs are arranged in the low pressure chamber.

9. Device according to any of the preceding claims, comprising a compressor connected to the low pressure chamber.

10. Device according to any of the preceding claims, comprising a second layer of flexible, non permeable material arranged on the first layer of flexible material, wherein the second layer comprises a plurality of holes.

11. Device according to claim 10, wherein the plurality of holes in the second layer are aligned with the plurality of cracks in the first layer.

12. Method for manufacturing a device according to any of the preceding claims, the method comprising the steps of:
- providing a permeable support plate;
- providing a low pressure chamber on one side of the permeable support plate;
- arranging a layer of non permeable, flexible material on the second opposite side of the permeable support plate;
- stabbing the flexible material with at least a pin to create cracks in the flexible material.

13. Method according to claim 12, wherein the at least pin is a needle.

14. Method according to claim 12 or claim 13, wherein the permeable support plate is provided with a plurality of holes and wherein a plate with a plurality of pins, aligned with the plurality of holes in the support plate is used for stabbing the flexible material.

## Patentansprüche

1. Vorrichtung zum Ergreifen eines Objektes durch Ansaugen, wobei die Vorrichtung Folgendes umfasst:
- eine durchlässige Auflageplatte (2),
- eine Schicht (7) aus flexiblem Material, die auf der Auflageplatte angeordnet ist,
- eine Niederdruckkammer (4), die an der zur Schicht aus flexiblem Material gegenüberliegenden Seite der Auflageplatte angeordnet ist,
wobei die Schicht aus flexiblem Material aus einem nicht durchlässigen Material besteht, **dadurch gekennzeichnet, dass** die Schicht mit mehreren Bruchstellen (8) versehen ist, die von einer Oberfläche zur gegenüberliegenden Oberfläche verlaufen.

2. Vorrichtung nach Anspruch 1, wobei die durchlässige Auflageplatte mit mehreren Öffnungen versehen ist.

3. Vorrichtung nach Anspruch 2, wobei jede Bruchstelle auf einer Linie mit einer der mehreren Öffnungen angeordnet ist.

4. Vorrichtung nach einem der vorhergehenden Ansprüche, wobei die Bruchstellen gerade sind und senkrecht zwischen den beiden Oberflächen verlaufen.

5. Vorrichtung nach einem der Ansprüche 1 bis 3, wobei die Bruchstellen gerade sind und wobei der Winkel zwischen den Bruchstellen und den beiden Oberflächen kleiner als 90° Grad ist.

6. Vorrichtung nach einem der vorhergehenden Ansprüche, wobei das flexible Material ein geschlossenzelliger Schaumstoff ist.

7. Vorrichtung nach einem der vorhergehenden Ansprüche, wobei die Niederdruckkammer durch Wände umschlossen ist, wobei eine der Wände die durchlässige Auflageplatte umfasst.

8. Vorrichtung nach Anspruch 7, wobei in der Niederdruckkammer Auflagerippen angeordnet sind.

9. Vorrichtung nach einem der vorhergehenden Ansprüche, einen Kompressor umfassend, der an die Niederdruckkammer angeschlossen ist.

10. Vorrichtung nach einem der vorhergehenden Ansprüche, eine zweite Schicht aus flexiblem, nicht durchlässigem Material umfassend, die auf der ersten Schicht aus flexiblem Material angeordnet ist, wobei die zweite Schicht mehrere Öffnungen umfasst.

11. Vorrichtung nach Anspruch 10, wobei die mehreren Öffnungen in der zweiten Schicht in eine Linie mit den mehreren Bruchstellen in der ersten Schicht gebracht sind.

12. Verfahren zur Herstellung einer Vorrichtung nach einem der vorhergehenden Ansprüche, wobei das Verfahren folgende Schritte umfasst:
- Bereitstellen einer durchlässigen Auflageplatte,
- Bereitstellen einer Niederdruckkammer auf einer Seite der durchlässigen Auflageplatte,
- Anordnen einer Schicht aus nicht durchlässigem, flexiblem Material auf der zweiten, gegenüberliegenden Seite der durchlässigen Auflageplatte,
- Einstechen des flexiblen Materials mit mindestens einem Dorn, um Bruchstellen in dem flexiblen Material zu bilden.

13. Verfahren nach Anspruch 12, wobei der mindestens eine Dorn eine Nadel ist.

14. Verfahren nach Anspruch 12 oder Anspruch 13, wobei die durchlässige Auflageplatte mit mehreren Öffnungen versehen ist und wobei zum Einstechen des flexiblen Materials eine Platte mit mehreren Dornen, die in Linie mit den mehreren Öffnungen in der Auflageplatte gebracht sind, benutzt wird.

## Revendications

1. Dispositif de préhension d'un objet par succion, ledit dispositif comprenant :
- une plaque de support perméable (2) ;
- une couche (7) de matériau flexible aménagée sur la plaque de support :
- une chambre de basse pression (4) aménagée sur la plaque de support sur le côté opposé de la couche de matériau flexible,
dans lequel la couche de matériau flexible est formée d'un matériau non perméable, **caractérisé en ce que** la couche est pourvue d'une pluralité de fentes (8) allant d'une surface à la surface opposée.

2. Dispositif selon la revendication 1, dans lequel la plaque de support perméable est pourvue d'une pluralité de trous.

3. Dispositif selon la revendication 2, dans lequel chaque fente est ménagée en ligne avec l'un de la pluralité de trous.

4. Dispositif selon l'une quelconque des revendications précédentes, dans lequel les fentes sont droites et courent perpendiculairement entre les deux surfaces.

5. Dispositif selon l'une quelconque des revendications 1 à 3, dans lequel les fentes sont droites et dans lequel l'angle entre les fentes et les deux surfaces est plus petit que 90 °.

6. Dispositif selon l'une quelconque des revendications précédentes, dans lequel le matériau flexible est une mousse à cellules fermées.

7. Dispositif selon l'une quelconque des revendications précédentes, dans lequel la chambre à basse pression est enserrée par des parois, l'une des parois comprenant la plaque de support perméable.

8. Dispositif selon la revendication 7, dans lequel des nervures de support sont aménagées dans la chambre à basse pression.

9. Dispositif selon l'une quelconque des revendications précédentes, comprenant un compresseur raccordé à la chambre à basse pression.

10. Dispositif selon l'une quelconque des revendications précédentes, comprenant une seconde couche de matériau flexible non perméable aménagée sur la première couche de matériau flexible, dans lequel la seconde couche comprend une pluralité de trous.

11. Dispositif selon la revendication 10, dans lequel la pluralité de trous de la seconde couche sont alignés avec la pluralité de fentes de la première couche.

12. Procédé de fabrication d'un dispositif selon l'une quelconque des revendications précédentes, le procédé comprenant les étapes consistant à :
- mettre en oeuvre une plaque de support perméable ;
- mettre en oeuvre une chambre à basse pression sur un côté de la plaque de support perméable ;
- aménager une couche de matériau flexible non perméable sur le second côté opposé de la plaque de support perméable ;
- piquer le matériau flexible avec au moins une broche pour créer des fentes dans le matériau flexible.

13. Procédé selon la revendication 12, dans lequel la au moins une broche est une aiguille.

14. Procédé selon la revendication 12 ou la revendication 13, dans lequel la plaque de support perméable est pourvue d'une pluralité de trous et dans lequel une plaque avec une pluralité de broches, alignées sur la pluralité de trous de la plaque de support, est utilisée pour piquer le matériau flexible.
